# EUROPEAN PATENT SPECIFICATION

(11) **EP 1 229 534 B1**
(45) Date of publication and mention of the grant of the patent: **10.03.2010**
(21) Application number: 02250642.2
(22) Date of filing: 30.01.2002
(51) Int. Cl.: G11B 19/26, G11B 19/02

(54) **Method for storing information while recording media is formatted in parallel**
Verfahren zur Speicherung von Information mit parallelen Formattierung des Aufzeichnungsmedium
Méthode d'emmagasinage d'information avec formattage en parallèle du milieu d'enregistrement

(30) Priority: 30.01.2001 JP 2001021529
(43) Date of publication of application: 07.08.2002
(60) Divisional application: 07018365.2
(73) Proprietor: Ricoh Company, Ltd., Tokyo 143-8555 (JP)
(72) Inventor: Sasaki, Yoshiyuki, Machida-shi, Tokyo (JP)
(74) Representative: Lamb, Martin John Carstairs

(56) References cited:
- EP-A- 0 364 176
- EP-A- 0 899 735
- US-A- 5 699 335
- US-A- 6 134 197

## Description

### BACKGROUND OF THE INVENTION

### 1. Field of the Invention

The present invention relates to a method for storing and reproducing information using rewritable information recording media such as a CD-RW (Compact Disc - ReWritable) and a DVD+RW (Digital Video or Versatile Disc + ReWritable), and further to an information storing/reproduction apparatus, an information processing system including the same, and a computer program used on the same.

### 2. Description of the Related Art

One of a plurality of standard file systems for rewritable information recording media such as the CD-RW and the DVD+RW is called Universal Disc Format (UDF). Utilizing a recording format suitable for each kind of device, UDF is applied to various devices. Since the CD-RW and the DVD+RW are capable of random access, Random UDF is used.

It is necessary to format a CD-RW disc by storing dummy data to the entire recording region or a designated recording region of the disc in order to store or to reproduce data at random. A DVD+RW also must be formatted by storing dummy data in an unrecorded region to achieve compatibility with conventional DVD-ROM drives.

Time required to format a disc increases proportionally as the memory capacity of the disc increases because the entire disc or a designated region of the disc must be filled with dummy data.

The Japanese Laid-open Patent Application No. 11-134799 describes an information storing/reproducing apparatus which formats a disc in the background so that a user could store and/or reproduce data in a short period of time after requesting to format the disc. Though the application describes an embodiment of the background formatting of a CD-RW disc, the background formatting of a DVD+RW disc is also suggested.

The background formatting fills the unformatted region of a disc with dummy data while the user does not request for storing or reproducing data. When the user does request for data storing or reproduction while the disc is being formatted, the user's request is performed by interrupting the formatting process.

While the formatting is performed in the background, the data storing and/or reproduction requested by the user and the dummy data storing as a formatting process are to be executed in parallel.

On the other hand, the user can store data on the disc and reproduce it by designating addresses at random. In the case of a constant linear velocity (CLV) disc such as a CD or a DVD, however, the rotational speed of the disc.must be changed depending on the radial position of a designated memory address on the disc, which lowers the performance of information the storing/reproducing apparatus.

The Japanese Laid-open Patent Application No. 2000-11524 describes an information storing and reproducing apparatus that stores data on a disc and reproduces the data in a constant angular velocity (CAV) mode to avoid such a problem. Since the CAV mode does not change the rotating speed of the disc depending on a designated address, it is suitable for the Random UDF. In the CAV mode, the storing and reproducing speed at an inner radius is lower than that at an outer radius, that is, the storing and reproducing speed increases as a designated address becomes higher.

EP0364176 discloses a system and method for reducing format times of a magneto-optical disc drive. The system and method involve formatting the disc on a continuous basis during "disc-idle" periods, rather than all at once.

The disc is formatted until there is a disc request from a application program. This disc request causes the formatting to be suspended whilst the disc access is carried out. Once the disc access is completed, the formatting process is resumed.

US5699335 discloses a spindle motor driver for the spindle motor of a rotating optical disc. A constant linear velocity (CLV) servo is provided for controlling the spindle motor to rotate with a CLV according to the signal processed by a processor. A constant angular velocity (CAV) servo is connected parallel to the CLV servo to control the spindle motor to rotate with a CAV when an optical head performs jumping to a specific track.

Most information storing and reproducing apparatuses support both the CAV mode and the CLV mode, the CLV mode having the same linear speed as the CAV mode does at the outer radius. For example, a CD-RW disc storing and reproducing apparatus having a quadruple speed at the inner radius and a ten times speed at the outer radius usually supports the CLV mode of the ten times speed. If data is to be stored sequentially by the information storing and reproducing apparatus above, the ten times speed CLV mode is more efficient than the CAV mode.

The CLV mode fits to the background formatting because formatting, including background formatting, is a sequential data storing process. For Random UDF, the CAV mode is suitable.

As described above, the method for controlling disc rotation, CAV or CLV, suitable for the storage/reproduction of user data is not necessarily identical to the method suitable for controlling disc rotation for background formatting.

Background formatting is sometimes interrupted by a user's request for the storage and reproduction of data, and resumed after performing the user's request. Since the speed of background formatting is different from the speed of the storage and reproduction of data based on the user's request, a period of time to change the rotation speed is required when the background formatting is interrupted, and when it is resumed. The period required for changing the rotation speed of the disc results in low efficiency in the storage/reproduction of data, as well as delay in background formatting.

### SUMMARY OF THE INVENTION

Accordingly, it is a general object of the present invention to provide a novel and useful method and apparatus for storing and reproducing information, which ensures the highest efficiency for both formatting and storing and reproducing of user data, while both processes proceed in parallel, by properly controlling the rotation speed of the disc.

Another and more specific object of the present invention is to provide a method and apparatus for storing/reproducing information, which sustains reasonable efficiency in the storage and reproduction of user data by reducing the frequency of switching the disc rotation control method when background formatting is often interrupted.

Yet another object of the present invention is to provide a method and apparatus for recording/reproducing information, which shortens time required for background formatting.

According to the present invention, the method for storing data in recording media using an information storage apparatus that has a plurality of rotation modes of the recording media, includes a step of formatting the recording media in a first rotation mode, a step of stopping, in response to a request for storing data in the recording media, the formatting of the recording media, a step of setting the recording media in a second rotation mode that is suitable for storing data in the recording media, a step of storing data in the recording media in the second rotation mode, a step of setting, in response to an end of storing data in the recording media, the recording media in the first rotation mode, and a step of resuming formatting of the recording media in the first rotation mode.

The information storage apparatus to which the present invention is applied, therefore, can store data in the most suitable rotation mode for storing data, and format the recording media in the background in the most suitable rotation mode for formatting the recording media. Each of storing and formatting can be performed at a high efficiency

According to a first aspect of the present invention, a method is provided as set out in claim 1. While the constant angular velocity (CAV) mode is suitable for storing data in response to a user's request, the CLV mode is suitable for formatting the recording media, each of storing and formatting is performed in a suitable rotation mode, resulting in good performance.

Preferred features of this aspect are set out in claim 2.

Accordingly, the information storage apparatus can format the recording media, despite the rotation mode in which data is stored in the recording media, at the highest speed, resulting in reducing time required for the formatting.

The method for storing data of the present invention can further include a step of measuring time, in response to an end of storing data in the recording media, wherein the step of resuming formatting the recording media is not performed until a predetermined period of time passes.

The information storage apparatus stops formatting the recording media in the background whenever a user requests for storing data in the recording media or reproducing the data, and resumes formatting the recording media in the background after storing and/or reproducing as requested by the user is completed. If the information storage apparatus changes the rotation mode of the recording media every time that it switches its operation from formatting to storing, or from storing to formatting, a lot of time is lost changing the rotation mode of the recording media. This time loss results in a low efficiency and performance of storing data requested by the user and for formatting the recording media.

By including a step of measuring time, in response to an end of storing data in the recording media, wherein the step of resuming of formatting the recording media is not performed until a predetermined period of time passes, the information storage apparatus switches the rotation mode less frequently.

The method for storing data of the present invention can further include a step of measuring time, in response to an end of storing data in the recording media, wherein formatting the recording media is resumed in the Constant Angular Velocity mode before a predetermined period of time passes.

The information storage apparatus stops formatting the recording media in the background whenever a user requests for storing data in the recording media or reproducing the data, and resumes formatting the recording media in the background after storing and/or reproducing as requested by the user is completed. If the information storage apparatus changes the rotation mode of the recording media every time that it switches its operation from formatting to storing, or from storing to formatting, it takes a lot of time to change the rotation mode of the recording media. This is a time loss that results in a low efficiency and performance of storing data requested by the user and for formatting the recording media.

By including a step of measuring time, in response to an end of storing data in the recording media, wherein formatting the recording media is resumed in the Constant Angular Velocity mode before a predetermined period of time passes the information storage apparatus switches the rotation mode less frequently, resulting in good performance for storing data requested by the user.

According to a second aspect of the invention, there is provided an apparatus as set out in claim 7. Preferred features of this aspect are set out in claims 8 to 13.

According to a third aspect of the invention, there is provided a computer program as set out in claim 14.

According to a fourth aspect of the invention, there is provided a method as set out in claim 15. Accordingly, the case that while the CAV mode is suitable for storing data in response to a user's request, the ZCLV mode is suitable for formatting the recording media, so that storing and formatting are each performed in a suitable rotation mode, resulting in good performance. Preferred features of this aspect are set out in claims 16 to 20.

According to a fifth aspect of the invention, there is provided an apparatus as set out in claim 21. Preferred features of this aspect are set out in claims 22 to 26.

The recording media can be a rewritable optical disc such as CD-RW or DVD+RW.

Other objects, features, and advantages of the present invention will be more apparent from the following detailed description when read in conjunction with the accompanying drawings.

### BRIEF DESCRIPTION OF THE DRAWINGS

Fig. 1 is a block diagram showing an optical disc drive according to the first embodiment of the present invention;
Fig. 2 is a schematic drawing showing a step of the background formatting and the user data recording/reproduction of a DVD+RW disc;
Fig. 3 is a schematic drawing showing another step of the background formatting and the user data recording/reproduction of a DVD+RW disc;
Fig. 4 is a schematic drawing showing yet another step of the background formatting and the user data recording/reproduction of a DVD+RW disc;
Fig. 5 is a schematic drawing showing yet another step of the background formatting and the user data recording/reproduction of a DVD+RW disc;
Fig. 6 is a flowchart showing an operation of the background formatting according to the first embodiment of the present invention;
Fig. 7 is a flowchart showing an operation of the background formatting as the second embodiment of the present invention;
Fig. 8 is a flowchart showing another operation of the background formatting as the third embodiment of the present invention;
Fig. 9 is a flowchart showing yet another operation of the background formatting as the fourth embodiment of the present invention;
Fig. 10 is a flowchart showing yet another operation of the background formatting as the fifth embodiment of the present invention; and
Fig. 11 is a flowchart showing yet another operation of the background formatting as the sixth embodiment of the present invention.

### DETAILED DESCRIPTION OF THE PREFERRED EMBODIMENTS

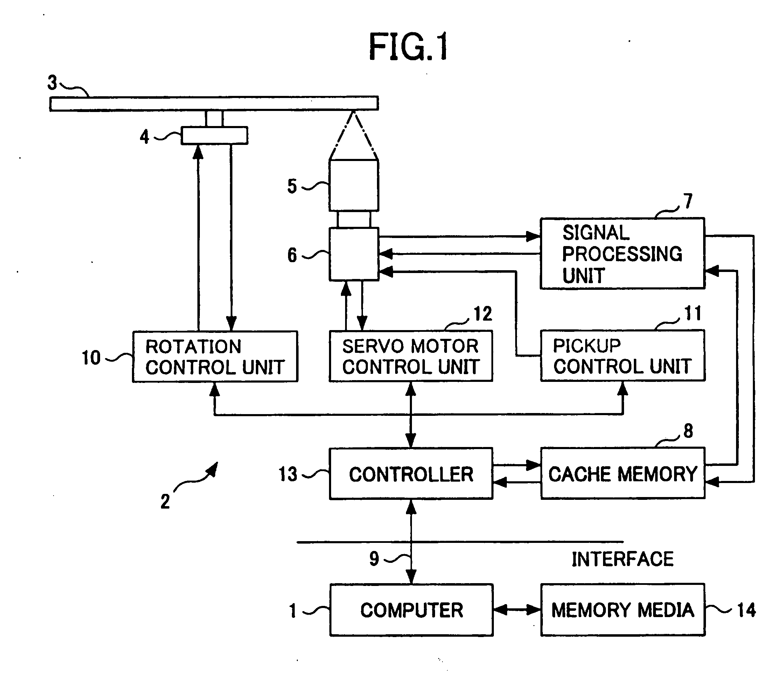

The first embodiment of the present invention is now described with reference to Figs. 1 through 6. Fig. 1 is a block diagram showing the structure of an information storing and reproducing apparatus to which the embodiment is applied. The optical disc drive 2, the information storing and reproducing apparatus, is a stand-alone drive connected to, or embedded in, a computer 1. Information recording media 3 is a rewritable optical disc such as a DVD+RW disc.

In the optical disc drive 2, the information recording media 3 is rotated by a spindle motor 4 in the CAV mode, the CLV mode, or the ZCLV mode. An optical pickup 5, which emits a laser beam to the information recording media 3 rotated by the spindle motor 4 and is movable in the radial direction of the media, is provided as a recording/reproducing head. The optical pickup 5 is provided with a semiconductor laser which emits a laser beam, an object lens which focuses the laser beam, a photo detecting system which detects signals such as signals reproduced in rays reflected by the information recording media 3. The reproduced signal (readout information) detected by the photo detecting unit in the optical pickup 5 is temporarily stored in a cache memory 8 after processed by a signal processing unit 7, and transferred to the computer 1 through an interface 9. The spindle motor 4, the optical pickup 5, and the servo motor 6 have corresponding control units 10, 11, and 12, respectively. A controller 13 consisting of a CPU, a ROM, and a RAM controls the control units 10, 11, and 12 as well as a cache memory 8. Besides controlling the control units above, the controller 13 further realizes various functions as explained later.

The computer 1 consists of a CPU, a ROM, a RAM, and further includes a rigid disc drive or the memory media 14, such as a floppy disc (FD) or an optical disc, storing computer-readable computer programs. The memory media 14 stores a program for the controller 13 to control various functions. The computer 1 reads the computer program from the memory media 14, and the controller 13 performs various functions of the present invention.

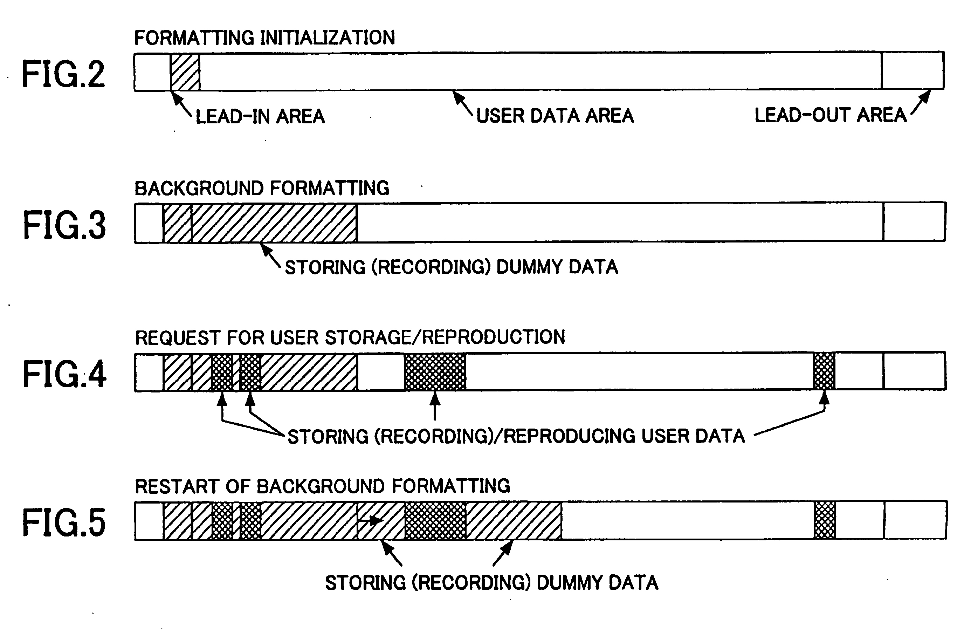

This embodiment is based on a condition that the optical disc drive 2 has a background formatting function, of which operation will be described below with reference to Figs. 2 through 5. The Figs. 2 through 5 are schematic drawings showing the storing of dummy data and the storing (recording) and reproduction of user data according to a user's request on a DVD+RW disc.

When a blank disc is inserted, dummy data is stored in a portion of a lead-in area during the initial process of formatting so that data can be stored on the disc or reproduced in response to a user's request (Fig. 2).

Dummy data is stored in an unrecorded region starting from the inner circle of the disc during the background formatting (Fig. 3). When the user requests to store or reproduce data during this process, the background formatting is temporarily interrupted, and the user's request is performed first (Fig. 4). Because the address of the data which the user requests to store or to reproduce changes at random, the CAV mode in which the rotating speed of the disc is constant regardless of the designated address is more efficient.

After performing the storing and reproducing of data in response to the user's request, the background formatting is resumed starting from the address formatted before the interruption (Fig. 5).

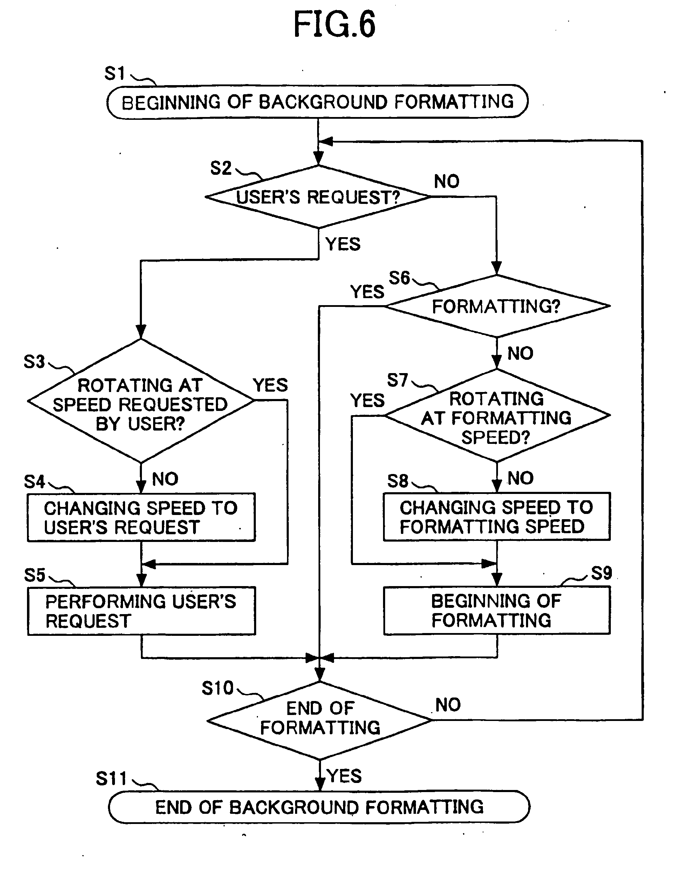

With reference to the flowchart in Fig. 6, the operation, after the beginning of the background formatting, of the optical disc drive 2 controlled by the controller 13 will now be described according to the first embodiment. Formatting in the background begins (Step S1). The controller 13 checks whether the user requests to store or reproduce data (Step S2). If the user requests to do so (Y branch of S2), the controller 13 further checks whether the disc is rotating at a speed suitable for the storing and reproducing of the user's request (S3). If the disc is not rotating at a speed corresponding to the speed of storage and reproduction designated by the user (N branch of S3), the controller 13 changes the rotating speed of the spindle motor 4 through the rotation control unit 10 (S4). The storing and reproducing of the user's request is performed (S5). The storage and reproduction requested by the user is controlled based on the CAV mode.

On the other hand, if no request is made by the user (N branch of S2), the controller 13 checks whether the background formatting is proceeding (S6). If the background formatting is not being processed (N branch of S6), the controller 13 further checks whether the current rotation speed is suitable for formatting the disc (S7). If it is not suitable (N branch of S7), the rotation speed of the spindle motor 4 is adjusted through the rotation control unit 10 (S8). The background formatting begins (S9). The controller 13 checks whether the entire disc has been formatted (S10). If the background formatting is not finished yet (N branch of S10), the controller 13 continues the format. If the background formatting is finished (Y branch of S10), the controller 13 ends the background formatting (S11).

Accordingly, each of the storing and reproducing of data in response to a user's request and the background formatting is performed at the best speed in order to increase efficiency of both processes.

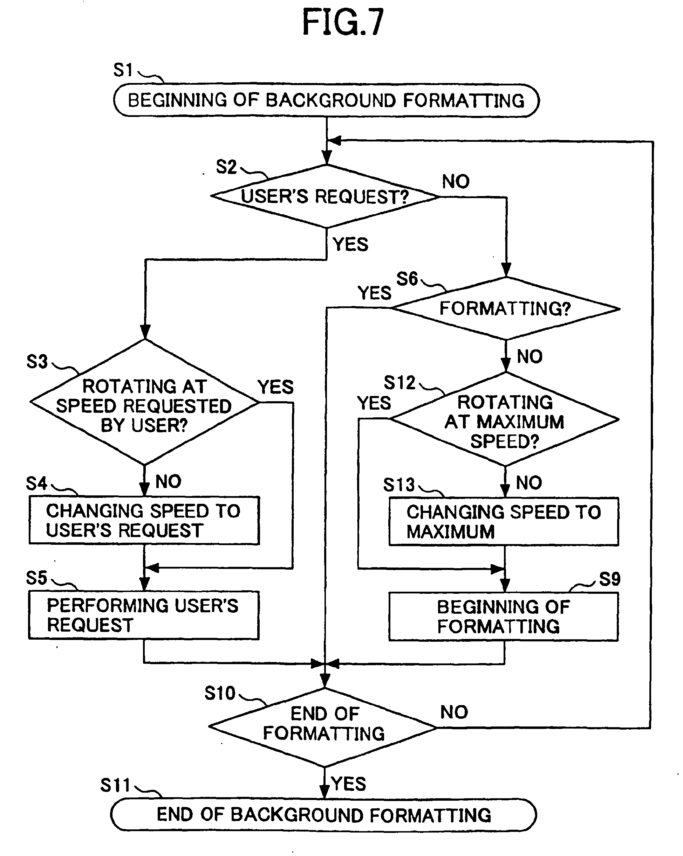

The second embodiment of the present invention is now described with reference to Fig. 7. Steps common to the first embodiment described above and the second embodiment to be described below (and the other embodiments to be described after the second) are referred to by the same numerals, and their description will be omitted.

Fig. 7 is a flowchart showing the operation of the controller 13 to which the second embodiment is applied. Most of the steps are the same as those of the first embodiment, but if there is no user's request (N branch of S2) and the background formatting is not being performed (N branch of S6), the controller 13 checks whether the disc rotation speed is set at the maximum speed at which the optical disc drive 2 can write (store) data (S12). If it is not set at the maximum speed (N branch of S12), the controller 13 increases the rotation speed of the spindle motor 4 up to the maximum through the rotation control unit 10 (S13). Then, the controller 13 starts the formatting in the background (S9).

Accordingly, the formatting process is always performed at the maximum speed at which the optical disc drive 2 can write, regardless of the speed of the storage and reproduction requested by the user, and the period required for the background formatting is reduced.

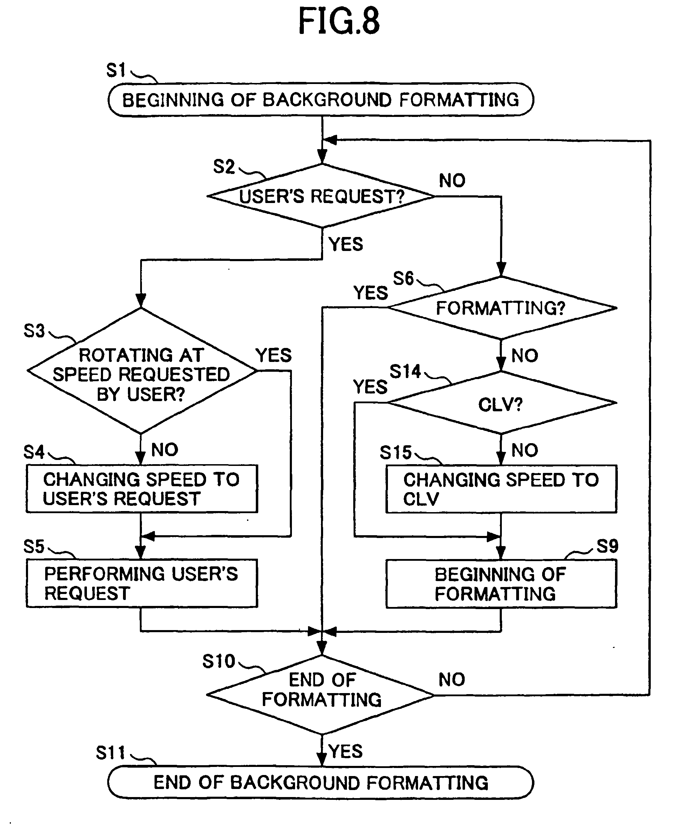

The third embodiment of the present invention is described with reference to Fig. 8. Fig. 8 is a flowchart showing the background operation.

This embodiment is almost identical to the first embodiment shown in Fig. 6, except that: if there is no user's request (N branch of S2), and the background formatting is not being executed (N branch of S6), the controller 13 checks whether the disc rotation speed is set to the CLV mode (S14). If it is not set to the CLV mode (N branch of S14), the controller 13 controls the spindle motor 4 through the rotation control unit 10 to set the CLV mode (S15). Then, the controller 13 starts the background formatting (S9).

Accordingly, in the case that the storage and reproduction requested by the user fits the constant angular velocity (CAV) mode and the background formatting fits the constant linear velocity (CLV) mode, this embodiment enables the optical disc drive 2 to achieve the best performance in each case.

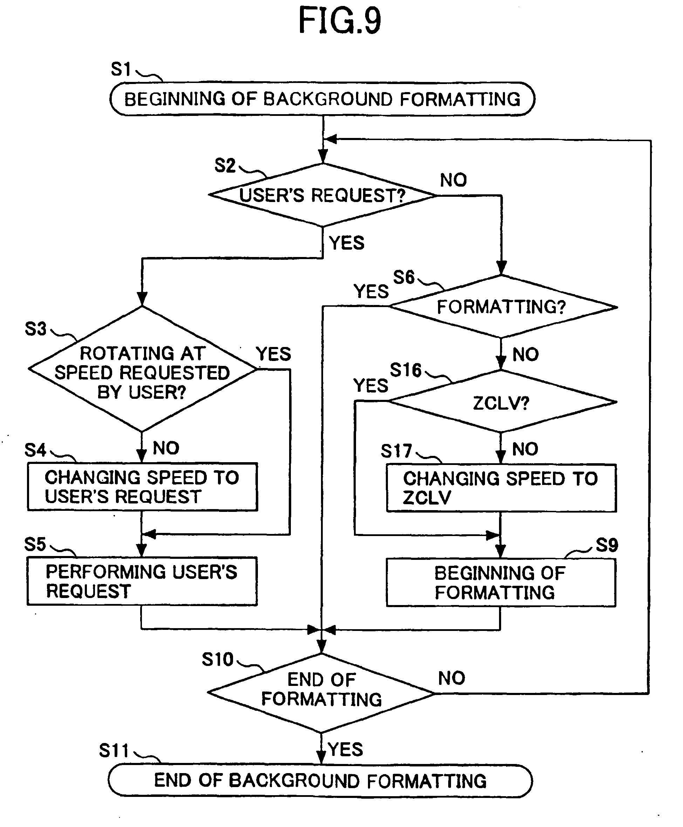

The fourth embodiment of the present invention will be described below in reference to Fig. 9. Fig. 9 is a flowchart showing the operation of the background formatting. The flowchart is almost the same as the flowchart shown in Fig. 8, but this embodiment checks whether the current setting of the disc rotation speed is the ZCLV mode (S16) if there is no user's request (N branch of S2), and the background formatting is not being performed (N branch of S6). If the disc rotation speed is not set to the ZCLV mode (N branch of S16), the controller 13 sets the rotation of the spindle motor 4 to the ZCLV mode through the rotation control unit 10 (S17), and then, starts the background formatting (S9).

Accordingly, in the case that the storage and reproduction requested by the user fits the constant angular velocity (CAV) mode and the background formatting fits the zone constant linear velocity (ZCLV) mode, this embodiment enables the optical disc drive 2 to achieve the best performance in both cases.

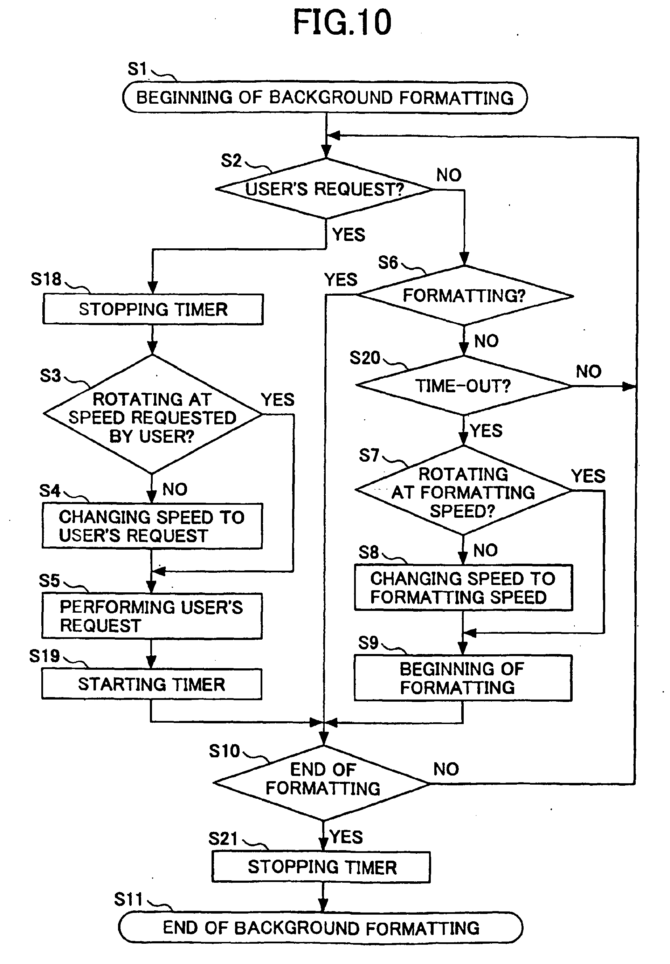

The fifth embodiment of the present invention will be described below in reference to Fig. 10, a flowchart showing the operation of the background formatting.

The background formatting begins (Step 1). The controller 13 checks whether the user requests to store or reproduce data (Step S2). If the user requests to do so (Y branch of S2), the controller 13 initializes (stops) a timer which will be described later (S18). The controller 13 checks whether the disc is rotating at a speed suitable for the storing/reproducing requested by the user (S3). If the disc is not rotating at a speed corresponding to the speed of storage and reproduction designated by the user (N branch of S3), the controller 13 changes the rotating speed of the spindle motor 4 through the rotation control unit 10 (S4). The storage and reproduction that is requested is performed (S5). The storage and reproduction of the user's request is controlled based on the CAV mode. After performing the storage and reproduction requested by the user, the controller 13 starts the timer which indicates a predetermined period in which the background formatting will not be performed (S19).

On the other hand, if no request is made by the user (N branch of S2), the controller 13 checks whether the background formatting is proceeding (S6). If the background formatting is not being processed (N branch of S6), the controller 13 checks whether the timer is in operation (S20). If the timer is not yet at time-out (N branch of S20), the controller 13 does not start the background formatting, but returns to the beginning of the flowchart and checks whether there is a user's request (S2). If the timer is at time-out (Y branch of S20), the controller 13 further checks whether the current rotation speed is suitable for formatting the disc (S7). If it is not suitable (N branch of S7), the rotation speed of the spindle motor 4 is adjusted through the rotation control unit 10 (S8). The background formatting begins (S9). The controller 13 checks whether the entire disc has been formatted (S10). If the background formatting is not finished yet (N branch of S10), the controller 13 continues the formatting. If the background formatting is finished (Y branch of S10), the controller 13 initializes (stops) the timer (S21). Then, the controller 13 ends the entire background formatting (S11).

According to this embodiment, even if the storage/reproduction requested by the user is finished, the background formatting is not performed until the predetermined period of time passes. Under the condition such that the background formatting and the storage/reproduction requested by the user are frequently switched, this embodiment lowers the frequency of the switching of the media rotation control method, and sustains the performance of the read/reproduction requested by the user at a reasonable level.

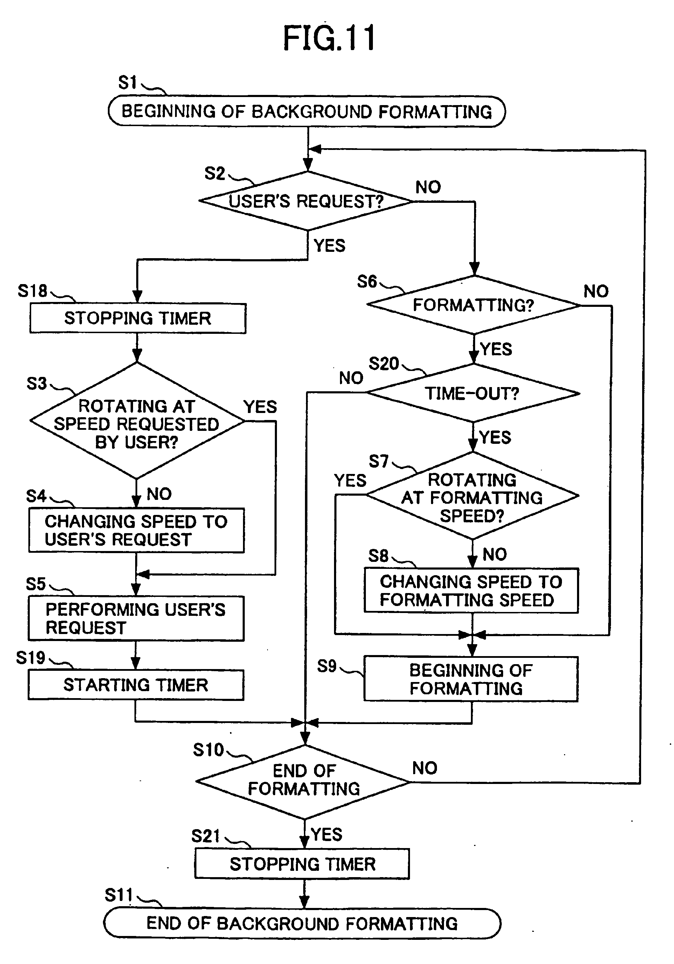

The sixth embodiment of the present invention will be described below in reference to Fig. 11, a flowchart showing the operation of the background formatting.

The background formatting begins (Step 1). The controller 13 checks whether the user requests to store or reproduce data (Step S2). If the user requests to do so (Y branch of S2), the controller 13 initializes (stops) a timer which will be described later (S18). The controller 13 checks whether the disc is rotating at a speed suitable for the storing/reproducing of the user's request (S3). If the disc is not rotating at a speed corresponding to the speed of storing/reproducing designated by the user (N branch of S3), the controller 13 changes the rotating speed of the spindle motor 4 through the rotation control unit 10 (S4). The storage/reproduction of the user's request is performed (S5). The storage/reproduction of the user's request is controlled based on the CAV mode. After performing the storage/reproduction requested by the user, the controller 13 starts the timer which indicates a predetermined period in which the background formatting will not be performed (S19).

On the other hand, if no request is made by the user (N branch of S2), the controller 13 checks whether the background formatting is proceeding (S6). If the background formatting is not being processed (N branch of S6), the controller 13 commences the background formatting without changing the rotation speed (S9). That is, the background formatting is performed using the disc rotation speed at which the storage/reproduction requested by the user has been performed.

If the background formatting is being performed (Y branch of S6), the controller 13 checks whether the timer is in operation (S20). If the timer is not yet at time-out (N branch of S20), the controller 13 checks whether the entire disc has been formatted (S10). If the timer is at time-out (Y branch of S20), the controller 13 further checks whether the current rotation speed is suitable for formatting the disc (S7). If it is not suitable (N branch of S7), the rotation speed of the spindle motor 4 is adjusted through the rotation control unit 10 (S8). The background formatting begins (S9). That is, after the time-out of the timer, the speed of the background formatting is increased.

The controller 13 checks whether the entire disc has been formatted (S10). If the background formatting is not finished yet (N branch of S10), the controller 13 continues the formatting. If the background formatting has been finished (Y branch of S10), the controller 13 initializes (stops) the timer (S21). Then, the controller 13 ends the entire background formatting (S11).

According to this embodiment, even if the storage/reproduction requested by the user is finished, the background formatting is performed at the same speed as the storage/reproduction requested by the user until the predetermined period of time passes. Under the condition such that the background formatting and the storage/reproduction requested by the user are frequently switched, this embodiment lowers the frequency of the switching in the media rotation control method, and sustains the performance of the storage/reproduction requested by the user at a reasonable level. If the user does not request a storage/reproduction for a predetermined period after the controller 13 resumes the background formatting, the controller 13 switches the speed to the CLV mode, which is higher than the CAV mode. This switching enables the optical disc drive 2 to choose a suitable speed for the background formatting, and results in the reduction in time required for the background formatting.

The preferred embodiments of the present invention are described above. The present invention is not limited to these embodiments, but various variations and modifications may be made without departing from the scope of the present invention.

This patent application is based on Japanese priority patent application No. 2001-021529 filed on January 30, 2001.

## Claims

1. A method of storing data in a recording medium (3) in Universal Disk Format, the method comprising the steps of:
formatting the recording medium (3) in Constant Linear Velocity mode;
suspending, in response to a request for storing data in the recording medium (3), the formatting of the recording medium (3);
setting the recording medium (3) in Constant Angular Velocity mode;
storing the data in the recording medium (3) in the Constant Angular Velocity mode;
setting, in response to completion of the storing of the data in the recording medium (3), the recording medium (3) in the Constant Linear Velocity mode; and
resuming the formatting of the recording medium (3) in the Constant Linear Velocity mode.

2. A method as claimed in claim 1, wherein the recording medium (3) formatted in the Constant Linear Velocity mode is rotated at a maximum rotating speed at which the information storage apparatus can store data in the recording medium (3).

3. A method as claimed in claim 1, further comprising the step of:
measuring time, in response to an end of storing data in the recording medium (3), wherein said step of resuming the formatting the recording medium (3) is not performed until a predetermined period of time passes.

4. A method as claimed in claim 1, further comprising the step of:
measuring time, in response to an end of storing data in the recording medium (3), wherein formatting the recording medium (3) is resumed in the Constant Angular Velocity mode before a predetermined period of time passes.

5. A method as claimed in claim 4, wherein after the predetermined period of time passes, the recording medium is set in the Constant Linear Velocity mode.

6. A method as claimed in claim 1, wherein the recording medium (3) is a rewritable optical disc.

7. An apparatus for storing data in a recording medium (3) in Universal Disk Format, comprising:
a motor (4) arranged to rotate the recording medium (3) in a plurality of rotation modes; and
a controller (13) arranged to format the recording medium (3) in Constant Linear Velocity mode, suspend, in response to a request for storing data in the recording medium (3), the formatting of the recording medium (3), cause the motor (4) to rotate in Constant Angular Velocity mode, store the data in the recording medium (3) in the Constant Angular Velocity mode, cause, in response to completion of the storing of the data in the recording medium (3), the motor (4) to rotate in the Constant Linear Velocity mode, and resume the formatting of the recording medium (3) in the Constant Linear Velocity mode.

8. An apparatus as claimed in claim 7, wherein the recording medium (3) formatted in the Constant Linear Velocity mode is arranged to be rotated at a maximum rotational speed at which the apparatus can store data in the recording medium (3).

9. An apparatus as claimed in claim 7, further comprising a timer arranged to start in response to an end of storing data in the recording medium (3), wherein said controller (14) is arranged to resume formatting the recording medium (3) after a predetermined period of time passes.

10. An apparatus as claimed in claim 7, further comprising a timer arranged to start in response to an end of storing data in the recording medium (3), wherein said controller (14) is arranged to resume formatting the recording medium (3) in the Constant Angular Velocity mode before a predetermined period of time passes.

11. An apparatus as claimed in claim 10, wherein after the predetermined period of time passes, the recording medium (3) is set in the Constant Linear Velocity mode.

12. An apparatus as claimed in claim 7, wherein the recording medium (3) is a rewritable optical disc.

13. An information processing apparatus comprising the apparatus as claimed in claim 7.

14. A computer program arranged to cause a computer (11) to store data in a rewritable recording medium (3) in Universal Disk Format by performing the steps of:
formatting the recording medium (3) in Constant Linear Velocity mode;
suspending, in response to a request for storing data in the recording medium (3), the formatting of the recording medium (3) in Constant Angular Velocity mode;
storing the data in the recording medium (3) in the Constant Angular Velocity mode;
setting, in response to completion of the storing of the data in the recording medium (3), the recording medium (3) in the Constant Linear Velocity mode; and
resuming the formatting of the recording medium (3) in the Constant Linear Velocity mode.

15. A method of storing data in a recording medium (3) in Universal Disk Format, the method comprising the steps of:
formatting the recording medium (3) in Zone Constant Linear Velocity mode;
suspending, in response to a request for storing data in the recording medium (3), the formatting of the recording medium (3);
setting the recording medium (3) in Constant Angular Velocity mode;
storing the data in the recording medium (3) in the Constant Angular Velocity mode;
setting, in response to completion of the storing of the data in the recording medium (3), the recording medium (3) in the Zone Constant Linear Velocity mode; and
resuming the formatting of the recording medium (3) in the Zone Constant Linear Velocity mode.

16. A method as claimed in claim 15, wherein the recording medium (3) is formatted in the Zone Constant Linear Velocity mode is rotated at a maximum rotating speed at which the information storage apparatus can store data in the recording medium.

17. A method as claimed in claim 15, further comprising the step of:
measuring time, in response to an end of storing data in the recording medium (3), wherein said step of resuming the formatting the recording medium (3) is not performed until a predetermined period of time passes.

18. A method as claimed in claim 15, further comprising the step of:
measuring time, in response to an end of storing data in the recording medium (3), wherein formatting the recording medium (3) in the Constant Angular Velocity mode before a predetermined period of time passes.

19. A method as claimed in claim 18, wherein after the predetermined period of time passes, the recording medium (3) is set in the Zone Constant Linear Velocity mode.

20. A method as claimed in claim 15, wherein the recording medium (3) is a rewritable optical disc.

21. An apparatus for storing data in a recording medium (3) in Universal Disk Format, comprising:
a motor (4) arranged to rotate the recording medium (3) in a plurality of rotation modes; and
a controller (13) is arranged to format the recording medium (3) in Zone Constant Linear Velocity mode, suspend, in response to a request for storing data in the recording medium (3), the formatting of the recording medium (3), cause the motor (4) to rotate in Constant Angular Velocity mode, store the data in the recording medium (3) in the Constant Angular Velocity mode, cause, in response to completion of the storing of the data in the recording medium (3), the motor (4) to rotate in the Zone Constant Linear Velocity mode, and resume the formatting of the recording medium (3) in the Zone Constant Linear Velocity mode.

22. An information storage apparatus as claimed in claim 21, wherein the recording medium (3) formatted in the Zone Constant Linear Velocity mode is arranged to rotate at a maximum rotational speed at which the information storage apparatus can store data in the recording medium (3).

23. An information storage apparatus as claimed in claim 21, further comprising a timer arranged to start in response to an end of storing data in the recording medium, wherein said controller (13) is arranged to resume formatting the recording medium (3) after a predetermined period of time passes.

24. An information storage apparatus as claimed in claim 21, further comprising a timer arranged to start in response to an end of storing data in the recording medium (3), wherein said controller (13) is arranged to resume formatting the recording medium (3) in the Constant Angular Velocity mode before a predetermined period of time passes.

25. An information storage apparatus as claimed in claim 24, wherein after the predetermined period of time passes, the recording medium (3) is set in the Zone Constant Linear Velocity mode.

26. An information storage apparatus as claimed in claim 21, wherein the recording medium (3) is a rewritable optical disc.

## Patentansprüche

1. Verfahren zum Speichern von Daten in einem Aufzeichnungsmedium (3) im universalen Plattenformat bzw. im Universal Disc Format, wobei das Verfahren folgende Schritte umfasst:
Formatieren des Aufzeichnungsmediums (3) im Konstant-Lineargeschwindigkeitsmodus bzw. im Constant Linear Velocity Modus;
Aussetzen der Formatierung des Aufzeichnungsmediums (3), in Antwort auf eine Anforderung zum Speichern von Daten im Aufzeichnungsmedium (3);
Setzen des Aufzeichnungsmediums (3) in Konstant-Winkelgeschwindigkeitsmodus bzw. Constant Angular Velocity Modus;
Speichern der Daten im Aufzeichnungsmedium (3) im Konstant-Winkelgeschwindigkeitsmodus, bzw. Constant Angular Velocity Modus;
Setzen des Aufzeichnungsmediums (3) in den Konstant-Lineargeschwindigkeitsmodus, bzw. Constant Linear Velocity Modus in Antwort auf eine Vollendung des Speicherns von Daten im Aufzeichnungsmedium;
Wiederaufnehmen des Formatierens des Speichermediums (3) im Konstant-Lineargeschwindigkeitsmodus, bzw. Constant Linear Velocity Modus.

2. Verfahren wie beansprucht in Anspruch 1, bei welchem das Aufzeichnungsmedium (3), welches im Konstant-Lineargeschwindigkeitsmodus formatiert ist, mit einer maximalen Drehgeschwindigkeit gedreht wird, bei der die Informationsspeicherungsvorrichtung Daten in dem Aufzeichnungsmedium (3) speichern kann.

3. Verfahren wie beansprucht in Anspruch 1, weiter folgenden Schritt umfassend:
Zeitnehmen, in Antwort auf ein Ende des Speicherns von Daten im Aufzeichnungsmedium (3) wobei der Schritt des Wiederaufnehmens der Formatierung des Speichermediums (3) nicht ausgeführt wird, bis eine vorbestimmte Zeitspanne verstreicht.

4. Verfahren wie beansprucht in Anspruch 1, weiter umfassend folgenden Schritt:
Zeitnehmen, in Antwort auf ein Ende des Speicherns von Daten im Aufzeichnungsmedium (3), wobei das Formatieren des Speichermediums (3) im Konstant-Winkelgeschwindigkeitsmodus wiederaufgenommen wird bevor die vorbestimmte Zeitspanne verstreicht.

5. Verfahren wie beansprucht in Anspruch 4, wobei nach dem die vorbestimmte Zeitspanne verstreicht, das Aufzeichnungsmedium in den Konstant-Lineargeschwindigkeitsmodus gesetzt wird.

6. Verfahren wie beansprucht in Anspruch 1, wobei das Aufzeichnungsmedium (3) eine wiederbeschreibbare optische Platte ist.

7. Vorrichtung zum Speichern von Daten in einem Aufzeichnungsmedium (3) im universalen Plattenformat bzw. Universal Disc Format, umfassend:
einen Motor (4) der angepasst ist, das Speichermedium (3) in einer Vielzahl von Drehungsmodi zu drehen; und
eine Steuereinheit (13), die angepasst ist, das Aufzeichnungsmedium (3) im konstanten Winkelgeschwindigkeitsmodus bzw. im Constant Linear Velocity Modus zu formatieren, das Formatieren des Aufzeichnungsmediums (3) auszusetzen, in Antwort auf eine Anforderung zum Speichern von Daten in dem Aufzeichnungsmedium (3), den Motor (4) zum Drehen im Konstant-Winkelgeschwindigkeitsmodus, bzw. Constant Angular Velocity Modus, zu veranlassen, Daten in dem Aufzeichnungsmedium (3) im Konstant-Winkelgeschwindigkeitsmodus bzw. im Constant Angular Velocity Modus, zu speichern, in Antwort auf eine Vollendung des Speicherns der Daten in dem Aufzeichnungsmedium (3), den Motor (4) im Konstant-Lineargeschwindigkeitsmodus bzw. im Constant Linear Velocity Modus, zu veranlassen sich zu drehen, und das Formatieren des Aufzeichnungsmediums (3) im Konstant-Lineargeschwindigkeitsmodus bzw. im Constant Linear Velocity Modus, wiederaufzunehmen.

8. Vorrichtung wie beansprucht in Anspruch 7, bei welcher das Aufzeichnungsmedium (3) das im Konstant-Lineargeschwindigkeitsmodus bzw. im Constant Linear Velocity Modus, formatiert ist, angepasst ist, mit einer maximalen Drehgeschwindigkeit gedreht zu werden, bei der die Vorrichtung Daten auf dem Aufzeichnungsmedium (3) speichern kann.

9. Vorrichtung wie beansprucht im Anspruch 7, weiter umfassend einen Zeitgeber, der angepasst ist, zu starten in Antwort auf eine Beendigung eines Speicherns von Daten in dem Aufzeichnungsmedium (3), wobei die Steuereinheit (14) angepasst ist, das Formatieren des Aufzeichnungsmediums (3) wiederaufzunehmen, nachdem eine vorbestimmte Zeitspanne verstreicht.

10. Vorrichtung wie beansprucht in Anspruch 7, weiter umfassend einen Zeitnehmer, der angepasst ist, zu starten in Antwort auf eine Beendigung eines Speicherns von Daten in dem Aufzeichnungsmedium (3), wobei die Steuereinheit (14) angepasst ist ein Formatieren des Aufzeichnungsmediums (3) im Konstant-Winkelgeschwindigkeitsmodus wiederaufzunehmen bevor eine vorbestimmte Zeitspanne verstreicht.

11. Vorrichtung wie beansprucht in Anspruch 10, wobei nachdem die vorbestimmte Zeitspanne verstreicht, das Aufzeichnungsmedium (3) in den Konstant-Lineargeschwindigkeitsmodus gesetzt wird.

12. Vorrichtung wie beansprucht in Anspruch 7, wobei das Aufzeichnungsmedium (3) eine wiederbeschreibbare optische Platte ist.

13. Informationsverarbeitende Vorrichtung, welche die Vorrichtung wie beansprucht in Anspruch 7 umfasst.

14. Computerprogramm, dass angepasst ist, einen Computer (11) zu veranlassen, Daten zu speichern in einem wiederbeschreibbaren Aufzeichnungsmedium (3) im universalen Plattenformat, bzw. im Universal Disc Format, durch die Ausführung der vorliegenden Schritte:
Formatieren des Aufzeichnungsmediums (3) im konstanten Lineargeschwindigkeitsmodus bzw. im Constant Linear Velocity Modus;
Aussetzen der Formatierung des Aufzeichnungsmediums (3), in Antwort auf eine Anforderung zum Speichern von Daten im Aufzeichnungsmedium (3) im Konstant-Winkelgeschwindigkeitsmodus;
Speichern der Daten im Aufzeichnungsmedium (3) im Konstant-Winkelgeschwindigkeitsmodus, bzw. Constant Angular Velocity Modus;
Setzen des Aufzeichnungsmediums (3) in den Konstant-Lineargeschwindigkeitsmodus, bzw. Constant Linear Velocity Modus in Antwort auf die Vollendung des Speicherns der Daten im Aufzeichnungsmedium; und
Wiederaufnehmen des Formatierens des Speichermediums (3) im Konstant-Lineargeschwindigkeitsmodus, bzw. Constant Linear Velocity Modus.

15. Verfahren zum Speichern von Daten in einem Aufzeichnungsmedium (3) im universalen Plattenformat, bzw. im Universal Disc Format, wobei das Verfahren folgende Schritte umfasst:
Formatieren des Aufzeichnungsmediums (3) im Zonen-Konstant-Lineargeschwindigkeitsmodus, bzw. im Zone Constant Linear Velocity Modus;
Aussetzen des Formatierens des Aufzeichnungsmediums (3), in Antwort auf eine Anforderung zum Speichern von Daten in dem Aufzeichnungsmedium (3);
Setzen des Aufzeichnungsmediums (3) in Konstant-Winkelgeschwindigkeitsmodus bzw. in Constant Angular Velocity Modus;
Speichern der Daten in dem Aufzeichnungsmedium (3) im Konstant-Winkelgeschwindigkeitsmodus, bzw. im Constant Angular Velocity Modus;
Setzen, in Antwort auf die Beendigung des Speicherns der Daten im Aufzeichnungsmediums (3), des Aufzeichnungsmediums (3) in den Zonen-Konstant-Lineargeschwindigkeitsmodus, bzw. in den Zone Constant Linear Velocity Modus;
Wiederaufnehmen des Formatierens des Aufzeichnungsmediums (3) im Zonen-Konstant-Lineargeschwindigkeitsmodus, bzw. im Zone Constant Linear Velocity Modus.

16. Verfahren wie beansprucht in Anspruch 15, wobei das Aufzeichnungsmedium (3), das im Zonen-Konstant-Lineargeschwindigkeitsmodus formatiert ist, mit einer maximalen Drehgeschwindigkeit gedreht wird, bei der die Informationsspeichervorrichtung Daten in dem Aufzeichnungsmedium speichern kann.

17. Verfahren wie beansprucht in Anspruch 15, weiter umfassend folgenden Schritt:
Zeitnehmen in Antwort auf eine Beendigung eines Speicherns von Daten in dem Aufzeichnungsmedium (3), wobei der Schritt des Wiederaufnehmens des Formatierens des Aufzeichnungsmediums (3) nicht ausgeführt wird, bis eine vorbestimmt Zeitspanne verstreicht.

18. Verfahren wie beansprucht in Anspruch 15, weiter umfassend folgenden Schritt:
Zeitnehmen, in Antwort auf eine Beendigung eines Speicherns von Daten in dem Aufzeichnungsmedium (3) wobei das Speichermedium (3) im Konstant-Winkelgeschwindigkeitsmodus formatiert wird bevor eine vorbestimmte Zeitspanne verstreicht.

19. Verfahren wie beansprucht in Anspruch 18, wobei nachdem die vorbestimmte Zeitspanne verstreicht, das Aufzeichnungsmedium (3) in den Zonen-Konstant-Lineargeschwindigkeitsmodus gesetzt wird.

20. Verfahren wie beansprucht in Anspruch 15, wobei das Aufzeichnungsmedium (3) eine wiederbeschreibbare optische Platte ist.

21. Vorrichtung zum Speichern von Daten in einem Aufzeichnungsmedium (3) im universalen Plattenformat bzw. Universal Disc Format, umfassend:
einen Motor (4) der angepasst ist, das Speichermedium (3) in einer Vielzahl von Drehungsmodi zu drehen; und
eine Steuereinheit (13), die angepasst ist, das Aufzeichnungsmedium (3) im Zonen-Konstant-Winkelgeschwindigkeitsmodus bzw. im Zone Constant Linear Velocity Modus zu formatieren, das Formatieren des Aufzeichnungsmediums (3) auszusetzen, in Antwort auf eine Anforderung zum Speichern von Daten in dem Aufzeichnungsmedium (3), den Motor (4) zum Drehen im Konstant-Winkelgeschwindigkeitsmodus, bzw. Constant Angular Velocity Modus, zu veranlassen, die Daten in dem Aufzeichnungsmedium (3) im Konstant-Winkelgeschwindigkeitsmodus bzw. im Constant Angular Velocity Modus zu speichern, den Motor (4), in Antwort auf eine Vollendung des Speicherns der Daten in dem Aufzeichnungsmedium (3), zu veranlassen im Zonen-Konstanten-Lineargeschwindigkeitsmodus bzw. im Zone Constant Linear Velocity Modus, zu drehen, und das Formatieren des Aufzeichnungsmediums (3) im Konstant-Lineargeschwindigkeitsmodus bzw. im Constant Linear Velocity Modus, wiederaufzunehmen.

22. Informationsspeichervorrichtung wie beansprucht in Anspruch 21, bei welcher das Aufzeichnungsmedium (3) das im Zonen-Konstant-Lineargeschwindigkeitsmodus bzw. im Zone Constant Linear Velocity Modus, formatiert ist, angepasst ist, mit einer maximalen Drehgeschwindigkeit gedreht zu werden, bei der die Informationsspeichervorrichtung Daten auf dem Aufzeichnungsmedium (3) speichern kann.

23. Informationsspeichervorrichtung wie beansprucht im Anspruch 21, weiter umfassend einen Zeitgeber, der angepasst ist, zu starten in Antwort auf eine Beendigung eines Speicherns von Daten in dem Aufzeichnungsmedium (3), wobei die Steuereinheit (13) angepasst ist, das Formatieren des Aufzeichnungsmediums (3) wiederaufzunehmen, nachdem eine vorbestimmte Zeitspanne verstreicht.

24. Informationsspeichervorrichtung wie beansprucht in Anspruch 21, weiter umfassend ein Zeitnehmer, der angepasst ist, zu starten, in Antwort auf eine Beendigung eines Speicherns von Daten in dem Aufzeichnungsmedium (3), wobei die Steuereinheit (13) angepasst ist ein Formatieren des Aufzeichnungsmediums (3) im zonenkonstanten Winkelgeschwindigkeitsmodus wiederaufzunehmen bevor eine vorbestimmte Zeitspanne verstreicht.

25. Informationsspeichervorrichtung wie beansprucht in Anspruch 24, wobei nachdem die vorbestimmte Zeitspanne verstreicht, das Aufzeichnungsmedium (3) in den Zonen-Konstant-Lineargeschwindigkeitsmodus gesetzt wird.

26. Informationsspeichervorrichtung wie beansprucht in Anspruch 21, wobei das Aufzeichnungsmedium (3) eine wiederbeschreibbare optische Platte ist.

## Revendications

1. Procédé de stockage de données dans un support d'enregistrement (3) au format de disque universel, le procédé comprenant les étapes consistant à :
formater le support d'enregistrement (3) en mode à vitesse linéaire constante ;
suspendre, en réponse à une requête de stockage de données sur le support d'enregistrement (3), le formatage du support d'enregistrement (3) ;
placer le support d'enregistrement (3) en mode à vitesse angulaire constante ;
stocker les données sur le support d'enregistrement (3) en mode à vitesse angulaire constante ;
placer, en réponse à la réalisation du stockage des données sur le support d'enregistrement (3), le support d'enregistrement (3) en mode à vitesse linéaire constante ; et
reprendre le formatage du support d'enregistrement (3) en mode à vitesse linéaire constante.

2. Procédé selon la revendication 1, dans lequel le support d'enregistrement (3) formaté en mode à vitesse linéaire constante est tourné à une vitesse de rotation maximum à laquelle l'appareil de stockage d'informations peut stocker des données sur le support d'enregistrement (3).

3. Procédé selon la revendication 1, comprenant en outre l'étape consistant à :
mesurer le moment, en réponse à une fin du stockage des données sur le support d'enregistrement (3), auquel ladite étape de reprise du formatage du support d'enregistrement (3) n'est pas effectuée tant qu'une période de temps prédéterminée ne s'est pas écoulée.

4. Procédé selon la revendication 1, comprenant en outre l'étape consistant à :
mesurer le moment, en réponse à une fin du stockage des données sur le support d'enregistrement (3), auquel le formatage du support d'enregistrement (3) est repris en mode à vitesse angulaire constante avant qu'une période de temps prédéterminée ne se soit écoulée.

5. Procédé selon la revendication 4, dans lequel, après que la période de temps prédéterminée se soit écoulée, le support d'enregistrement est placé en mode à vitesse linéaire constante.

6. Procédé selon la revendication 1, dans lequel le support d'enregistrement (3) est un disque optique réinscriptible.

7. Appareil de stockage de données sur un support d'enregistrement (3) au format de disque universel, comprenant :
un moteur (4) agencé afin de faire tourner le support d'enregistrement (3) dans une pluralité de modes de rotation ; et
un contrôleur (13) agencé afin de formater le support d'enregistrement (3) en mode à vitesse linéaire constante, de suspendre, en réponse à une requête de stockage de données sur le support d'enregistrement (3), le formatage du support d'enregistrement (3), de provoquer le fait que le moteur (4) tourne en mode à vitesse angulaire constante, de stocker les données sur le support d'enregistrement (3) en mode à vitesse angulaire constante, de provoquer le fait que, en réponse à la réalisation du stockage des données sur le support d'enregistrement (3), le moteur (4) tourne en mode à vitesse linéaire constante, et de reprendre le formatage du support d'enregistrement (3) en mode à vitesse linéaire constante.

8. Appareil selon la revendication 7, dans lequel le support d'enregistrement (3) formaté en mode à vitesse linéaire constante est agencé afin d'être tourné à une vitesse de rotation maximum à laquelle l'appareil peut stocker des données sur le support d'enregistrement (3).

9. Appareil selon la revendication 7, comprenant en outre une minuterie agencée afin de démarrer en réponse à une fin du stockage de données sur le support d'enregistrement (3), dans lequel ledit contrôleur (14) est agencé afin de reprendre le formatage du support d'enregistrement (3) après qu'une période de temps prédéterminée se soit écoulée.

10. Appareil selon la revendication 7, comprenant en outre une minuterie agencée afin de démarrer en réponse à une fin du stockage de données sur le support d'enregistrement (3), dans lequel ledit contrôleur (14) est agencé afin de reprendre le formatage du support d'enregistrement (3) en mode à vitesse angulaire constante avant qu'une période de temps prédéterminée ne se soit écoulée.

11. Appareil selon la revendication 10, dans lequel, après que la période de temps prédéterminée se soit écoulée, le support d'enregistrement (3) est placé en mode à vitesse linéaire constante.

12. Appareil selon la revendication 7, dans lequel le support d'enregistrement (3) est un disque optique réinscriptible.

13. Appareil de traitement d'informations comprenant l'appareil selon la revendication 7.

14. Programme informatique agencé afin de provoquer le fait qu'un ordinateur (11) stocke des données sur un support d'enregistrement optique (3) au format de disque universel en effectuant les étapes consistant à :
formater le support d'enregistrement (3) en mode à vitesse linéaire constante ;
suspendre, en réponse à une requête de stockage de données sur le support d'enregistrement (3), le formatage du support d'enregistrement (3) en mode à vitesse angulaire constante ;
stocker les données sur le support d'enregistrement (3) en mode à vitesse angulaire constante ;
placer, en réponse à la réalisation du stockage des données sur le support d'enregistrement (3), le support d'enregistrement (3) en mode à vitesse linéaire constante ; et
reprendre le formatage du support d'enregistrement (3) en mode à vitesse linéaire constante.

15. Procédé de stockage de données sur un support d'enregistrement (3) au format de disque universel, le procédé comprenant les étapes consistant à :
formater le support d'enregistrement (3) en mode à vitesse linéaire constante de zone ;
suspendre, en réponse à une requête de stockage de données sur le support d'enregistrement (3), le formatage du support d'enregistrement (3) ;
placer le support d'enregistrement (3) en mode à vitesse angulaire constante ;
stocker les données sur le support d'enregistrement (3) en mode à vitesse angulaire constante ;
placer, en réponse à la réalisation du stockage des données sur le support d'enregistrement (3), le support d'enregistrement (3) en mode à vitesse linéaire constante de zone ; et
reprendre le formatage du support d'enregistrement (3) en mode à vitesse linéaire constante de zone.

16. Procédé selon la revendication 15, dans lequel le support d'enregistrement (3) est formaté en mode à vitesse linéaire constante de zone et est tourné à une vitesse de rotation maximum à laquelle l'appareil de stockage d'informations peut stocker des données sur le support d'enregistrement.

17. Procédé selon la revendication 15, comprenant en outre l'étape consistant à :
mesurer le moment, en réponse à une fin du stockage des données sur le support d'enregistrement (3), auquel ladite étape de reprise du formatage du support d'enregistrement (3) n'est pas effectuée tant qu'une période de temps prédéterminée ne s'est pas écoulée.

18. Procédé selon la revendication 15, comprenant en outre l'étape consistant à :
mesurer le moment, en réponse à une fin du stockage des données sur le support d'enregistrement (3), auquel le formatage du support d'enregistrement (3) est repris en mode à vitesse angulaire constante avant qu'une période de temps prédéterminée ne se soit écoulée.

19. Procédé selon la revendication 18, dans lequel, après que la période de temps prédéterminée se soit écoulée, le support d'enregistrement (3) est placé en mode à vitesse linéaire constante de zone.

20. Procédé selon la revendication 15, dans lequel le support d'enregistrement (3) est un disque optique réinscriptible.

21. Appareil de stockage de données sur un support d'enregistrement (3) au format de disque universel, comprenant :
un moteur (4) agencé afin de faire tourner le support d'enregistrement (3) dans une pluralité de modes de rotation ; et
un contrôleur (13) agencé afin de formater le support d'enregistrement (3) en mode à vitesse linéaire constante de zone, de suspendre, en réponse à une requête de stockage de données sur le support d'enregistrement (3), le formatage du support d'enregistrement (3), de provoquer le fait que le moteur (4) tourne en mode à vitesse angulaire constante, de stocker les données sur le support d'enregistrement (3) en mode à vitesse angulaire constante, de provoquer le fait que, en réponse à la réalisation du stockage des données sur le support d'enregistrement (3), le moteur (4) tourne en mode à vitesse linéaire constante de zone, et de reprendre le formatage du support d'enregistrement (3) en mode à vitesse linéaire constante de zone.

22. Appareil de stockage d'informations selon la revendication 21, dans lequel le support d'enregistrement (3) formaté en mode à vitesse linéaire constante de zone est agencé afin de tourner à une vitesse de rotation maximum à laquelle l'appareil de stockage d'informations peut stocker des données sur le support d'enregistrement (3).

23. Appareil de stockage d'informations selon la revendication 21, comprenant en outre une minuterie agencée afin de démarrer en réponse à une fin du stockage des données sur le support d'enregistrement, dans lequel la minuterie (13) est agencée afin de reprendre le formatage du support d'enregistrement (3) après qu'une période de temps prédéterminée se soit écoulée.

24. Appareil de stockage d'informations selon la revendication 21, comprenant en outre une minuterie agencée afin de démarrer en réponse à une fin du stockage des données sur le support d'enregistrement (3), dans lequel ledit contrôleur (13) est agencé afin de reprendre le formatage du support d'enregistrement (3) en mode à vitesse angulaire constante avant qu'une période de temps prédéterminée ne se soit écoulée.

25. Appareil de stockage d'informations selon la revendication 24, dans lequel, après que la période de temps prédéterminée se soit écoulée, le support d'enregistrement (3) est placé en mode à vitesse linéaire constante de zone.

26. Appareil de stockage d'informations selon la revendication 21, dans lequel le support d'enregistrement (3) est un disque optique réinscriptible.
